# EUROPÄISCHE PATENTANMELDUNG

(11) **EP 2 009 424 A1**
(43) Veröffentlichungstag der Anmeldung: **31.12.2008**
(21) Anmeldenummer: 08010945.7
(22) Anmeldetag: 17.06.2008
(51) Int. Cl.: G01N 21/27

(54) **Wellenlängen- und Intensitätsstandard für Spektrometer**

(30) Priorität: 26.06.2007 DE 102007029405
(71) Anmelder: Carl Zeiss MicroImaging GmbH, 07745 Jena (DE)
(72) Erfinder: Schebesta, Wilhelm, 07749 Jena (DE); Correns, Nico, 99425 Weimar (DE); Freytag, Lutz, 07743 Jena (DE); Rode, Michael, 07743 Jena (DE)
(74) Vertreter: Kintzel, Klaus-Peter

(57) **Zusammenfassung**

Es wird ein Wellenlängen- und Intensitätsstandard für Spektrometer, insbesondere zur Kalibrierung und Prüfung von Messköpfen für Spektrometer beschrieben, welche vorwiegend im nahen Infrarotbereich (NIR) des Spektrums einsetzbar sind. Der Standard umfasst eine Fassung (1) und einen in der Fassung (1) angeordneten Plattenkörper (2; 9) aus transparentem Kunststoff mit einer hohen Festigkeit und Formstabilität über einen großen Temperaturbereich, welcher in der Fassung angeordnet ist. Der Kunststoff besitzt im gesamten NIR-Bereich ausgeprägte Absorptionsbanden und eine solche chemische Struktur und Zusammensetzung, welche zuverlässig und zeitstabil eine hohe Feuchtigkeitsbarriere gegen Wasseraufnahme und Wasserabgabe gewährleistet. Der Plattenkörper (2; 9) besteht vorteilhaft aus einem amorphen, transparenten Copolymer auf der Basis von cyclischen und/oder linearen Olefinen besteht.

## Beschreibung

Die Erfindung betrifft ein Wellenlängen- und Intensitätsstandard für Spektrometer, insbesondere zur physikalischen und chemischen Analyse von Stoffen sowie zur Bestimmung der Eigenschaften dieser Stoffe und zur Prozesskontrolle, insbesondere in der chemischen Industrie. Dieser Standard ist vorzugsweise zur Kalibrierung und Prüfung von Messköpfen für Spektrometern vorgesehen, welche im nahen Infrarotbereich (NIR) des Spektrums sowohl bei Transmissionsmessungen als auch bei Messungen im reflektierten Licht eingesetzt werden.

Aus der Druckschrift der European Pharmacopoeia 5.0, "2.2.40. Near-infrared spectrophotometry", Seiten 59 bis 61, sind u.a. Ausführungen zur Kalibrierung von Spektrometern für Messungen von Substanzen und Proben mit Strahlung im nahen Infrarotbereich des Spektrum mit Wellenlängen zwischen 780 nm und 2500 nm enthalten. So können physikalische und chemische Informationen sowohl qualitativer als auch quantitativer Art von den untersuchten Substanzen und Proben gewonnen werden. Jedoch wird ein direkter Vergleich des Spektrums einer Substanz, welche mit einem Referenzspektrum einer chemischen Referenzsubstanz geprüft wird, wie es in der IR-Absorptionsspektroskopie üblich ist, nicht vorgenommen.

In der Infrarotspektroskopie werden in bekannter Weise folgende Messmethoden angewendet: Transmissionsmessungen, Messungen mit diffuser Reflexion und eine kombinierte Methode, bei welcher ein diffus reflektierender Reflektor hinter der zu prüfenden Substanz oder Probe, beispielsweise Flüssigkeiten und Festkörper, welche transparent für infrarote (IR) Strahlung der betreffenden Wellenlängen sind, angeordnet ist.

Die Messungen mit diffuser Reflexion werden allgemein bei Festkörpern angewendet, wobei zu beachten ist, dass die Messbedingungen so reproduzierbar wie möglich von Probe zu Probe sein müssen. Es wird die reflektierte Strahlung einer reflektierenden Hintergrundreferenz (Normal) gescannt (geprüft), um ein Wellenlängennormal als Referenzbasis für die Probenmessungen zu erhalten. Als Material für die Normale oder Standards werden u.a. keramische Materialien, Perfluorpolymere, Methylchloride oder auch Gold verwendet. Nachteilig ist, dass nur Spektren gegenüber Normalen gemessen und verglichen werden können, welche dieselben optischen Eigenschaften besitzen. Es müssen ferner die Partikelgröße, die Wasseraufnahme und der Zustand der Löslichkeit beachtet werden.

Bei der oben genannten kombinierten Methode wird, um die optische Weglänge zu vergrößern, ein Reflektor hinter der Probe angeordnet. Die Probe wird geprüft in einer Zelle mit einem geeigneten diffus reflektierenden Reflektor, der entweder aus einem geeigneten Metall oder aus einem inerten Material, wie z.B. Titandioxid (TiO₂), besteht, welches in betreffenden infraroten Spektralbereich keine Strahlung absorbiert bzw. seine Eigenschaften ohne Beeinflussung durch Umweltbedingungen, wie z.B. Feuchtigkeit, über einen längeren Zeitraum beibehält.

So liegt der Erfindung die Aufgabe zu Grunde, einen Wellenlängen- und Intensitätsstandard für NIR-Spektrometer zu schaffen, welcher im gesamten nahen Infrarotbereich (NIR) des Spektrums zeitstabil, preiswert und handhabungssicher ist und welcher zur Prüfung und Kalibrierung dieser Spektrometer als Transmissions- und Reflexionsstandard einsetzbar ist.

Erfindungsgemäß wird diese Aufgabe mit den im Hauptanspruch genannten Mitteln gelöst. In den Unteransprüchen sind Einzelheiten und weitere Ausführungsformen und Ausgestaltungen der Erfindung offenbart.

Um gut ausgeprägte und auswertbare Absorptionsbanden für die Messungen zu erhalten, ist es von Vorteil, wenn der Plattenkörper aus einem amorphen, transparenten Copolymer auf der Basis von cyclischen und/oder linearen Olefinen besteht.

Dabei ist es vorteilhaft, dass der Plattenkörper als transparente Platte ausgebildet ist, deren eine Fläche mit einer diffus reflektierenden Schicht belegt ist.

Als besonders vorteilhaft hat es sich erwiesen, wenn die diffus reflektierende Schicht aus Titandioxid oder aus einem, Titandioxid enthaltenden Lack besteht.

Vorteilhaft kann auch sein, wenn die Platte eine aufgeraute Fläche umfasst, welche mit einem geeigneten, gut reflektierenden Metall beschichtet ist.

Dabei ist es vorteilhaft, dass die aufgeraute Fläche mit Gold beschichtet ist.

Um eine diffuse Reflexion zu erreichen, kann die Platte auf ihrer einen Fläche auch mit einem metallbeschichteten Mikrolinsenarray versehen sein.

Vorteilhaft kann es ferner sein, dass der Plattenkörper mit einer reflektierenden Metallplatte verbunden ist, welche an der aufgerauten oder mit einem Mikrolinsenarray versehenen Fläche der Platte fest oder mit einem Abstand A angeordnet ist.

Eine vorteilhafte Ausführungsform des Standards ergibt sich, wenn der Plattenkörper zwei gegenüberliegende, glatte transparente Flächen besitzt und wenn eine aufgeraute oder eine mit TiO₂ beschichtete Metallplatte vorgesehen ist, welche mit ihrer aufgerauten oder beschichteten Fläche an einer der glatten Flächen des Plattenkörpers fest oder in einem Abstand anliegt.

Weiterhin kann es günstig sein, dass der Plattenkörper aus einem Kunststoff besteht, welchem etwa 3% TiO₂ beigemischt ist.

Eine weitere vorteilhafte Ausführungsform des Standards umfasst einen Plattenkörper in Form einer reinen Kunststoffplatte und eine mit TiO₂ gemischte Kunststoffplatte, wobei der Abstand der beiden Kunststoffplatten so bemessen ist, dass zwischen ihnen Interferenzen vermieden werden.

Zur Durchführung von Transmissionsmessungen ist es von Vorteil, wenn der Plattenkörper aus transparentem Kunststoff besteht, wobei die Flächen des Plattenkörpers unbeschichtet sind.

Zum Schutz gegen Umwelteinflüsse und gegen einen Verschleiß ist es vorteilhaft, wenn die Fassung des Standards nach au-ßen durch eine Abdeckplatte aus Hartglas oder durch eine Saphirscheibe abgeschlossen ist.

Die Erfindung soll nachstehend an einem Ausführungsbeispiel näher erläutert werden. In der zugehörigen Zeichnung zeigen
- Fig.1: den prinzipiellen Aufbau eines Wellenlängen- und Intensitätsstandard,
- Fig.2: einen Plattenkörper mit diffus reflektierender Schicht,
- Fig.3: einen Plattenkörper mit aufgerauter reflektierender Fläche,
- Fig.4: einen Plattenkörper mit reflektierendem Mikrolinsenarray,
- Fig.5: einen Plattenkörper mit diffus reflektierender Metallplatte,
- Fig.6: einen Plattenkörper mit einer aufgerauten und mit TiO₂ beschichteten Metallplatte,
- Fig.7: einen Plattenkörper mit einer mit TiO₂ gemischten Kunststoffplatte und
- Fig.8: einen Plattenkörper und eine Platte mit dazwischen eingelagertem TiO₂-Pulver.

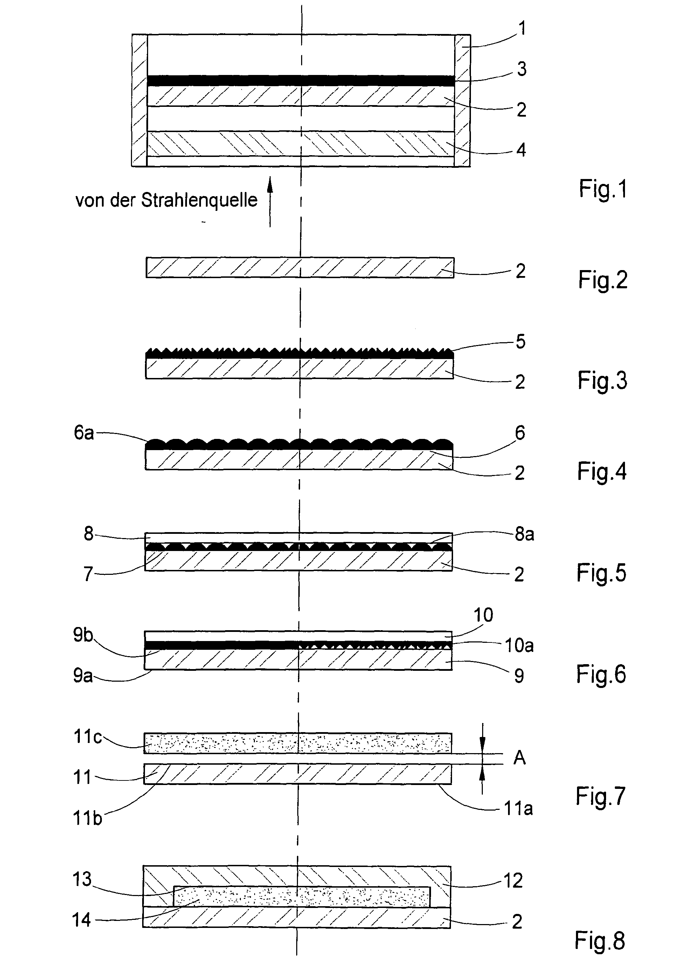

In Fig. 1 ist im Schnitt ein Wellenlängen- und Intensitätsstandard für Spektrometer dargestellt, welcher insbesondere zur Kalibrierung und Prüfung von Messköpfen für Spektrometer geeignet ist, welche vorwiegend mit Strahlung im nahen Infrarotbereich (NIR) des Spektrums arbeiten. Diese Standards umfassen vorteilhaft eine Fassung 1 und einen in der Fassung 1 angeordneten Plattenkörper 2 aus einem geeigneten transparentem Kunststoff mit einer hohen Festigkeit und Formstabilität über einen großen Temperaturbereich, welcher in der Fassung 1 angeordnet ist, wobei der Kunststoff im gesamten NIR-Bereich gut auswertbare ausgeprägte Absorptionsbanden und eine solche chemische Struktur und Zusammensetzung besitzt, welche zuverlässig und stabil über einen längeren Zeitraum eine sehr geringe Feuchtigkeits- bzw. Wasseraufnahme aus der Umgebung und sehr geringe Feuchtigkeits- bzw. Wasserabgabe an die Umgebung gewährleistet. Dieses muss gewährleistet sein, um über einen langen Zeitraum eine konstante Absorptionsbandenstruktur des Standards sicher zu stellen. Geeignete Kunststoffe für den Plattenkörper 2 sind beispielsweise Cycloolefin Copolymere in Form von amorphen, transparenten Copolymeren auf der Basis von cyclischen und/oder linearen Olefinen, wie z.B. Zeonex® cyclo-olefin-polymer(COC) basierend auf Norbonene-Derivaten.

Zur Durchführung von Messungen und Kalibrierungen im reflektierten Licht ist, wie in Fig.1 dargestellt, auf der, der Strahlungsquelle abgewandten Fläche des Plattenkörpers 2 eine diffus reflektierende Schicht 3, vorteilhaft aus Titandioxid (TiO₂) oder aus einem TiO₂ enthaltenen Lack, aufgebracht. Als vorteilhafte Plattendicke hat sich bei solchen Messungen und Kalibrierungen eine Dicke von vorteilhaft mindestens 4 mm ergeben, um gut auswertbare Absorptionsbanden des Plattenkörpers 2 zu bekommen, welche sich gut zur Kalibrierung von IR-Spektroskopen eignen.

Bei einem für Transparenzmessungen vorgesehenen Standard (Fig.2) ist eine unbeschichtete Platte geeigneter Dicke in der Fassung 1 angeordnet. Die Plattendicke sollte vorteilhaft mindestens 8 mm betragen, um beim Durchgang der Strahlung gut auswertbare Absorptionsbanden zu erhalten.

Die Fassung 1 kann zum Schutz gegen Umwelteinflüsse einseitig oder beidseitig durch Abschlussplatten 4 abgeschlossen sein. In Fig.1 ist nur eine Abschlussplatte 4 dargestellt. Der Werkstoff für die Abschlussplatte 4 muss verschleißfest und widerstandsfähig gegenüber Lösungsmittel und Säuren sein. Vorteilhaft ist als Werkstoff Hartglas oder Saphir vorgesehen. Der Abstand der Abschlussplatte 4 von Plattenkörper 2 ist vorteilhaft so zu bemessen, dass zwischen diesen Platten 2 und 4 keine störenden Interferenzen auftreten können.

In Fig.3 ist ein Plattenkörper 2 dargestellt, dessen, der Strahlungsquelle abgewandte Fläche 5 durch Sandstrahlen oder durch ein geeignetes Werkzeug aufgeraut und mit einem geeigneten, reflektierenden Metall, vorteilhaft mit Gold, beschichtet ist

Fig.4 zeigt einen Plattenkörper 2 mit einer mit einem metallbeschichteten Mikrolinsenarray 6a strukturierten, reflektierenden Fläche 6.

Fig.5 zeigt eine Ausführungsform mit einem Plattenkörper 2, welcher eine aufgeraute oder mit einem Mikrolinsenarray 7a strukturierten Fläche 7 besitzt. Dem Plattenkörper 2 ist an der, der Strahlungsquelle abgewandten Fläche 2 eine reflektierende Platte 8 aus Metall oder Kunststoff angeordnet, deren reflektierende Fläche 8a dem Plattenkörper 2 benachbart ist.

Bei der Ausführungsform nach Fig.6 besitzt ein Plattenkörper 9 zwei gegenüberliegende glatte, transparente Flächen 9a und 9b. Der Plattenkörper 9 ist mit einer, mit einer aufgerauten oder mit Titandioxid beschichteten Fläche 10a versehenen Platte 10 verbunden, wobei die Fläche 10a reflektierend ist. Die Platte 10a kann auch mit einem reflektierenden Mikrolinsenarray versehen sein. Die Fläche 10a der Platte 10 ist den Plattenkörper 9 zugewandt. Die Platten 9 und 10 können sich berühren. Sie können jedoch auch in einem Abstand A voneinander entfernt in der Fassung 1 angeordnet werden, wobei zu gewährleisten ist, dass störende Interferenzen zwischen den beiden Platten 9 und 10 vermieden werden.

In Fig.7 ist ein als Kunststoffplatte 11 ausgebildeter Plattenkörper mit zwei glatten, transparenten Flächen 11a und 11b dargestellt. In einem Abstand A ist eine Kunststoffplatte 11c vorgesehen, in welcher eine bestimmte Menge Titandioxid eingelagert ist, um eine diffuse Reflektion in Inneren der Kunststoffplatte 11 zu erzielen. Vorteilhaft sollen der Kunststoffplatte 11c etwa 3 % TiO₂ hinzugefügt sein.

In Fig.8 ist ein Standard für Messungen im reflektierten Licht dargestellt, welcher aus einem Plattenkörper 2 und einer damit verbundenen Platte 12 besteht, wobei die Platte 12 an ihrer dem Plattenkörper 2 zugewandten Seite eine Ausnehmung 13 besitzt. In dieser Ausnehmung 13 ist vorzugsweise TiO₂-Pulver 14 angeordnet.

### Bezugszeichenliste

- 1: Fassung
- 2: Plattenkörper
- 2a; 2b: Fläche
- 3: Schicht
- 4: Abschlussplatte
- 5: Fläche
- 6: Fläche
- 6a: Mikrolinsenarray
- 7: Strukturierte Fläche
- 7a: Mikrolinsenarray
- 8: Reflektierende Platte
- 8a: reflektierende Fläche
- 9: Plattenkörper
- 9a; 9b: transparente Fläche
- 10: Platte
- 10a: Fläche
- 11; 11c: Kunststoffplatte
- 11a; 11b: Fläche
- 12: Platte
- 13: Ausnehmung
- 14: TiO₂ -Pulver

## Patentansprüche

1. Wellenlängen- und Intensitätsstandard für Spektrometer, insbesondere zur Kalibrierung und Prüfung von Messköpfen für Spektrometer, welche vorwiegend im nahen Infrarotbereich des Spektrums einsetzbar sind,
umfassend eine Fassung (1) und einen in der Fassung (1) angeordneten Plattenkörper (2; 9) aus transparentem Kunststoff mit einer hohen Festigkeit und Formstabilität über einen großen Temperaturbereich, welcher in der Fassung angeordnet ist, wobei der Kunststoff im gesamten NIR-Bereich ausgeprägte Absorptionsbanden und eine solche chemische Struktur und Zusammensetzung besitzt, welche zuverlässig und zeitstabil eine hohe Feuchtigkeitsbarriere gegen Wasseraufnahme und Wasserabgabe gewährleistet.

2. Wellenlängen- und Intensitätsstandard nach Anspruch 1, **dadurch gekennzeichnet, dass** der Plattenkörper (2; 9) aus einem amorphen, transparenten Copolymer auf der Basis von cyclischen und/oder linearen Olefinen besteht.

3. Wellenlängen- und Intensitätsstandard nach Anspruch 1, **dadurch gekennzeichnet, dass** der Plattenkörper (2; 9) als transparente Platte ausgebildet ist, deren eine Fläche mit einer diffus reflektierenden Schicht belegt ist.

4. Wellenlängen- und Intensitätsstandard nach Anspruch 3, **dadurch gekennzeichnet, dass** die diffus reflektierende Schicht aus einem, Titandioxid enthaltenden Lack besteht.

5. Wellenlängen- und Intensitätsstandard nach einem der Ansprüche 1 bis 4, **dadurch gekennzeichnet, dass** der Plattenkörper (2) eine aufgeraute Fläche umfasst, welche mit einem gut reflektierenden Metall beschichtet ist.

6. Wellenlängen- und Intensitätsstandard nach Anspruch 5, **dadurch gekennzeichnet, dass** die aufgeraute Fläche mit Gold beschichtet ist.

7. Wellenlängen- und Intensitätsstandard nach einem der Ansprüche 1 bis 6, **dadurch gekennzeichnet, dass** der Plattenkörper (2) auf seiner einen Fläche mit einem metallbeschichteten Mikrolinsenarray (6a) versehen ist.

8. Wellenlängen- und Intensitätsstandard nach Anspruch 1 bis 3, **dadurch gekennzeichnet, dass** der Plattenkörper (2) mit einer reflektierenden Metallplatte (8) verbunden ist, welche an der aufgerauten oder an der mit einem Mikrolinsenarray versehenen Fläche (7) des Plattenkörpers (2) fest oder mit einem Abstand angeordnet ist.

9. Wellenlängen- und Intensitätsstandard nach Anspruch 1 oder 2, **dadurch gekennzeichnet,**
- **dass** der Plattenkörper (9) zwei gegenüberliegende, glatte transparente Flächen (9a; 9b) besitzt
- und **dass** eine aufgeraute oder eine mit TiO₂ beschichtete Platte (10) vorgesehen ist, welche mit ihrer aufgerauten oder beschichteten Fläche an einer der glatten Flächen (9a oder 9b) des Plattenkörpers (9) fest oder in einem Abstand anliegt.

10. Wellenlängen- und Intensitätsstandard nach Anspruch 1 oder 2, **dadurch gekennzeichnet, dass** der Plattenkörper (2) aus einem Kunststoff besteht, welchem etwa 3 % TiO₂ beigemischt ist.

11. Wellenlängen- und Intensitätsstandard nach einem der Ansprüche 1 oder 10, **dadurch gekennzeichnet, dass** der Standard aus einer reinen Kunststoffplatte (11) und einer mit TiO₂ gemischten Kunststoffplatte (11c) besteht, wobei der Abstand A der beiden Kunststoffplatten (11; 11c) so bemessen ist, dass zwischen ihnen Interferenzen vermieden werden.

12. Wellenlängen- und Intensitätsstandard nach Anspruch 1, **dadurch gekennzeichnet, dass** zur Durchführung von Transmissionsmessungen der Plattenkörper (2) aus transparentem Kunststoff besteht, wobei die Flächen (2a; 2b) des Plattenkörpers (2) unbeschichtet sind.

13. Wellenlängen- und Intensitätsstandard nach Anspruch 1, **dadurch gekennzeichnet, dass** die Fassung (1) nach außen durch eine Abdeckplatte (4) aus Hartglas oder durch eine Saphirscheibe abgeschlossen ist.
